# EUROPÄISCHE PATENTSCHRIFT

(11) **EP 2 024 719 B1**
(45) Veröffentlichungstag und Bekanntmachung des Hinweises auf die Patenterteilung: **22.12.2010**
(21) Anmeldenummer: 07729895.8
(22) Anmeldetag: 05.06.2007
(51) Int. Cl.: G01K 1/02

(54) **TEMPERATURSONDE**
TEMPERATURE PROBE
SONDE DE TEMPERATURE

(30) Priorität: 06.06.2006 DE 102006026515
(43) Veröffentlichungstag der Anmeldung: 18.02.2009
(73) Patentinhaber: Endress+Hauser GmbH+Co. KG, 79689 Maulburg (DE)
(72) Erfinder: VAN BEKKUM, Frank, Norcross, Georgia 30092 (US)
(74) Vertreter: Andres, Angelika Maria
(86) Internationale Anmeldenummer: PCT/EP2007/055515
(87) Internationale Veröffentlichungsnummer: WO 2007/141265

(56) Entgegenhaltungen:
- EP-A- 0 278 102
- JP-A- 2 147 927
- ANONYM: "DS1820 1?WireTM Digital Thermometer" INTERNET ARTIKEL, [Online] 29. April 2005 (2005-04-29), XP002451465 Gefunden im Internet: URL:http://web.archive.org/web/20050429151 042/http://www.astro.ucla.edu/~irlab/nirsp ec/docs/Application/Electronics/1820.pdf> [gefunden am 2007-09-19]

## Beschreibung

Die Erfindung betrifft eine Temperatursonde.

In der industriellen Messtechnik ist es in einer Vielzahl von Anwendungen erforderlich physikalische Eigenschaften eines Füllguts in einem Behälter zu bestimmen. Typischerweise ist dies bei der Lagerbestandskontrolle und im eichpflichtigen Verkehr der Fall. Zu den physikalischen Eigenschaften zählen dabei insb. der Füllstand, die Dichte und die Masse des im Behälter enthaltenen Füllguts, sowie dessen Temperatur. Die Bestimmung von Masse und Dichte sind insb. in der Öl- und Gasindustrie von besonderer Bedeutung, da dort häufig Produkte mit stark variabler Zusammensetzung verarbeitet bzw. gelagert werden.

Da die meisten in diesem Zusammenhang zu messenden physikalischen Größen von der Temperatur abhängig sind, ist eine genaue Bestimmung der Temperatur von besonderer Bedeutung.

Die Temperatur kann im einfachsten Fall durch einen im Behälter angeordneten

Temperatursensor erfasst werden, der die lokale Temperatur in dessen unmittelbarer Umgebung erfasst. Hier werden insbesondere Widerstandthermometer eingesetzt. Bei einem Widerstandsthermometer wird die Temperatur anhand eines Sensors mit einem von der Temperatur abhängige elektrischen Widerstand gemessen. Die stärksten Widerstandsänderungen zeigen reine Metalle, insb. sehr reine Edelmetalle. Sehr häufig werden standardisierte Temperaturfühler aus Kupfer oder aus Platin, z.B. Pt 100 Elemente mit einem Widerstand von 100 Ω bei 0°C, verwendet.

Für viele Anwendungen ist eine einzige lokale Temperaturmessung jedoch nicht ausreichend, da die Temperatur im Behälter in der Regel nicht homogen ist, sondern eine Temperaturverteilung mit einer unter Umständen recht großen Streubreite vorliegt. Es kann, beispielsweise durch Befüllungs- und/oder Entleerungsvorgänge, zur Bildung von Temperatur-Schichten kommen, d.h. die Temperatur im Behälter ist abhängig von der Höhe im Behälter, auf der die Temperatur gemessen wird. Außerdem kann die Temperatur oberhalb des Füllguts im Behälter deutlich von der Temperatur des Füllguts abweichen.

Um die physikalischen Eigenschaften genau bestimmen zu können, wird daher häufig anstelle einer lokalen Temperatur eine mittlere Temperatur ermittelt, die die Temperaturverteilung im Behälter berücksichtigt. Für viele Industriezweige gelten genaue Vorschriften, die bei der Bestimmung der mittleren Temperatur zu berücksichtigen sind. Ein Beispiel hierfür ist die Öl und Gas Industrie. Dort gelten in Amerika beispielsweise die Standards des American Petroleum Institutes, z.B. API Chapter 7. Analoge Vorschriften finden sich beispielsweise in Industrienormen, wie sie beispielsweise von der Internationalen Vereinigung der Standardisierungsgremien (International Organisation for Standardisation) herausgegeben werden, z.B. in der Norm ISO 4266

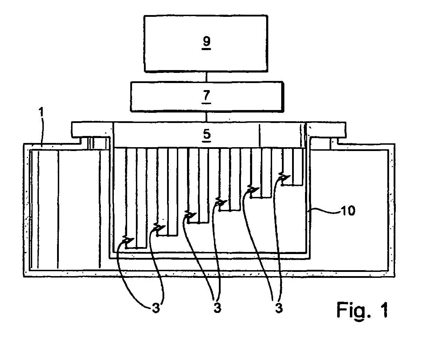

Die mittlere Temperatur kann beispielsweise, wie in Fig. 1 schematisch dargestellt, anhand von mehreren über die Höhe des Behälters 1 verteilt angeordneten Temperaturfühlern 3, z.B. Pt100 Widerstandsthermometem, bestimmt werden, die jeweils die lokale Temperatur in deren unmittelbarer Umgebung messen. Dabei werden die einzelnen Fühler 3 über einen Widerstandswandler 5 und einen Multiplexer 7 an eine übergeordnete Einheit 9 übertragen, die dann anhand der Einbauhöhe der einzelnen Temperaturfühler 3 und deren Messergebnissen die mittlere Temperatur bestimmt. Vorzugsweise liegt der übergeordneten Einheit 9 der aktuelle Füllstand vor und es werden nur die Messergebnisse derjenigen Temperaturfühler 3 einbezogen, die tatsächlich vom Füllgut bedeckt sind.

Die einzelnen Temperaturfühler 3 sind in einer Sonde zusammengefasst und durch eine Öffnung in den Behälter 1 eingeführt. Die Sonde weist beispielsweise eine metallische starre oder flexible Hülse 10 auf, in der die einzelnen Temperaturfühler 3 übereinander angeordnet sind. Die Hülse 10 dient dem Schutz der Temperaturfühler 3 und muss entsprechend den chemischen und mechanischen Anforderungen im Behälter 1 stabil und resistent sein.

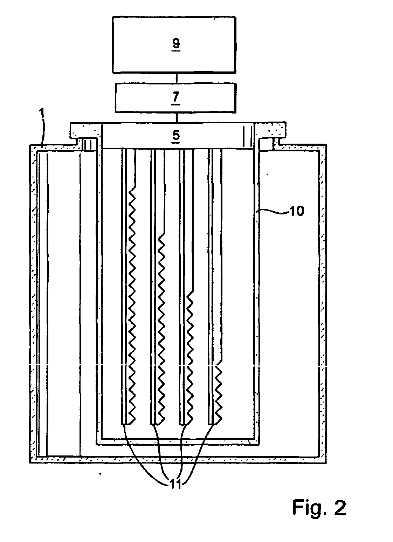

Alternativ können, wie in Fig. 2 schematisch dargestellt, mehrere Widerstandselemente 11 unterschiedlicher Länge eingesetzt werden. Hierzu eignen sich beispielsweise Widerstandselemente aus Kupferdraht. Auch hier werden die aktuellen Widerstände der einzelnen Widerstandselemente 11 über Widerstandswandler 5 und einen Multiplexer 7 erfasst und in digitale Temperaturmesswerte umgewandelt, die einer übergeordneten Einheit 9 zugeführt werden. Diese bestimmt die mittlere Temperatur anhand des Füllstandes und des digitalen Temperaturmesswerts des längsten vom Füllgut bedeckten Widerstandselements 11. Dabei wird vorzugsweise anhand des Füllstandes und der separat zu messenden Temperatur oberhalb des Füllguts der Beitrag des nicht vom Füllgut bedeckten Teils dieses Widerstandselements 11 zur mittleren Temperatur herausgerechnet.

Auch hier werden die einzelnen Widerstandselemente 11 in einer Hülsen 10 zusammengefasst und durch eine Öffnung in den Behälter 1 eingeführt.

Ein Nachteil der oben beschriebenen Temperatursonden besteht darin, dass jeder einzelne Temperaturfühler 3 bzw. jedes einzelne Widerstandselement 11 einzeln angeschlossen werden muss. Je nach Wahl dieser Bauteile sind hierzu drei oder unter Umständen auch vier Leitungen pro Bauteil erforderlich, die alle in der Sonde geführt werden müssen. Entsprechend hoch ist die Anzahl der Leitungen und der Anschlüsse. Hierdurch entstehen hohe Herstellungskosten.

Leitungen und Anschlüsse stellen Schwachstellen der Sonden dar. Besonders bei Sonden, bei denen die einzelnen Temperaturfühler 3 oder Widerstandselemente 11 in flexiblen Hülsen 10 angeordnet sind, in denen die Leitungen gebündelt und zur übergeordneten Einheit geführt werden, werden die Leitungen und die Anschlüsse besonders stark beansprucht. Wenn eine Leitung oder ein Anschluss beschädigt wird, fällt der entsprechende Temperaturfühler 3 bzw. das entsprechende Widerstandselement 11 aus. Dies führt unmittelbar zu Messfehlern.

Ein weiterer Nachteil besteht darin, dass die Länge der Sonde und die Anzahl der darin enthaltenen Temperaturfühler 3 bzw. Widerstandselemente 11 vorab in Abhängigkeit von der Höhe des Behälters 1 gewählt werden muss. Häufig sind derartige Temperatursonden Maßanfertigungen. Eine Lagerhaltung oder Bevorratung beim Hersteller bzw. beim Kunden wird hierdurch aufwendig und teuer. Flexibilität ist aufgrund der anwendungs-spezifischen Längen nicht gegeben.

Ein weiterer Nachteil besteht darin, dass der Ausfall eines einzigen Temperaturfühlers 3 bzw. Widerstandselements 11 der Sonde in der Regel einen Austausch der gesamten Sonde zur Folge hat. Dies ist teuer und zeitaufwendig und kann unter Umständen zu erheblichen Verzögerungen für den Anwender führen.

Ein weiterer Nachteil besteht darin, dass in der Regel nur ein Totalausfall eines Widerstandselements für den Anwender erkennbar wird. Das Einsetzen einer Schädigung des Widerstandselements, z.B. durch Korrosion, bewirkt langsame Veränderung des Widerstandes und führt zu Messfehlern, die von außen gar nicht oder nur sehr schwer zu erkennen sind.
EP 0 278 102 beschreibt eine Temperatursonde, die mehrere Temperatursensoren längs eines Kabels aufweist.
Das Datenblatt zu Thermometer DS1820 der Firma Dallas Semiconductor offenbart ein Sensorelement, das mit dem "1-Wire interface" betrieben werden kann.

Es ist eine Aufgabe der Erfindung eine flexibel einsetzbare kostengünstige Temperatursonde anzugeben.

Hierzu besteht die Erfindung in einer Temperatursonde mit

- einer Hülse,
wobei die Hülse aus einzelnen miteinander verbindbaren Segmenten besteht, und in jedem Segment ein Temperatursensor angeordnet ist

- mehreren in der Hülse übereinander angeordneten

Temperatursensoren,

-- die jeweils parallel zueinander an Masse und an eine in der Hülse

geführte Kommunikationsleitung angeschlossen sind und über diese mit

Energie versorgt werden, und
wobei jedem Temperatursensor eine eindeutige Adresse zugeordnet ist

- einer übergeordneten Einheit,

-- die an die Kommunikationsleitung angeschlossen ist,

- bei der jeder Temperatursensor dazu dient eine lokale Temperatur in der

Umgebung des jeweiligen Temperatursensors zu messen und diese in

Form eines digitalen Temperatursignals über die Kommunikationsleitung

der übergeordneten Einheit zur Verfügung zu stellen.

Gemäß einer Weiterbildung besteht die Hülse zumindest teilweise aus einem elektrisch leitfähigen Material. Sie ist geerdet und die Temperatursensoren sind über die geerdete Hülse an Masse angeschlossen.

Gemäß einer weiteren Weiterbildung weist jeder Temperatursensor einen

Speicher zur Speicherung von Daten auf.

Gemäß einer Ausgestaltung sind die Temperatursensoren jeweils in einem Hohlraum in einem Abschnitt des jeweiligen Segments der Hülse angeordnet, der mit einer Vergussmasse ausgefüllt ist.

Gemäß einer weiteren Weiterbildung verläuft in jedem Segment ein Leitungssegment der Kommunikationsleitung, an das der jeweilige Temperatursensor angeschlossen ist, und die einzelnen Leitungssegmente weisen endseitig Anschlussmittel auf, über die die einzelnen Leitungssegmente aneinander angrenzender Segmente der Sonde elektrisch miteinander verbindbar sind.

Gemäß einer bevorzugten Ausgestaltung weisen die Anschlussmittel einen an einem ersten Ende des jeweiligen Leitungssegment angeschlossenen Kontaktstift und eine an einem zweiten Ende des jeweiligen Leitungssegments angeschlossene Kontakthülse auf, und sind gegenüber dem jeweiligen Segment der Hülse isoliert.

Gemäß einer weiteren Weiterbildung sind die Segmente der Hülse über mechanische Verbindungen miteinander verbunden, die zugleich eine elektrische Verbindung bewirken, über die die einzelnen Segmente geerdet sind.

Gemäß einer Weiterbildung der Erfindung ist jedem Temperatursensor ein Schalter nachgeschaltet, der an Masse und an die Kommunikationsleitung angeschlossen ist, der über eine eindeutige Adresse verfügt über die er von der übergeordneten Einheit über die Kommunikationsleitung erkannt und einzeln angesteuert werden kann, und der derart an die Kommunikationsleitung angeschlossen ist, dass er in Abhängigkeit von der Ansteuerung durch die übergeordnete Einheit, eine Schalterstellung einnehmen kann, die bewirkt, dass die Kommunikationsleitung zumindest zeitweilig unterbrochen ist, und alle nachfolgenden Temperatursensoren und die diesen nachgeschalteten Schalter von der Kommunikationsleitung abgetrennt sind. Zusätzlich ist jedem Schalter ein über die Kommunikationsleitung auslesbarer Speicher zugeordnet, indem Daten abgelegt sind, über die der dem Schalter zugehörige Temperatursensor eindeutig identifizierbar ist.

Weiter besteht die Erfindung in einem Verfahren zur Bestimmung einer Reihenfolge der Temperatursensoren einer Temperatursonde nach der zuletzt genannten Weiterbildung, bei dem

- die übergeordnete Einheit über die Kommunikationsleitung die

angeschlossenen Schalter bestimmt,

- die übergeordnete Einheit die Schalter einzeln nacheinander in eine

Schalterstellung versetzt, bei der alle dem jeweiligen

Schalter nachfolgenden Schalter von der Kommunikationsleitung

abgetrennt sind,

- die übergeordneten Einheit in diesem Zustand die Anzahl der nun

noch an die Kommunikationsleitung angeschlossenen Schalter

bestimmt, und

- anhand dieser Anzahlen die Reihenfolge der Schalter und

der zugehörige Temperatursensoren ermittelt.

Die Erfindung und weitere Vorteile werden nun anhand der Figuren der Zeichnung, in denen zwei Ausführungsbeispiele dargestellt ist, näher erläutert; gleiche Elemente sind in den Figuren mit gleichen Bezugszeichen versehen.

Fig. 1 zeigt eine herkömmliche Temperatursonde mit Temperaturfühlern, die

die lokale Temperatur in deren unmittelbarer Umgebung messen;

Fig. 2 zeigt eine herkömmliche Temperatursonde mit Widerstandselementen

unterschiedlicher Länge;

Fig. 3 zeigt eine schematische Darstellung einer erfindungsgemäßen Temperatursonde;

Fig. 4 zeigt eine Ansicht einer erfindungsgemäßen Gliedersonde;

Fig. 5 zeigt ein Segment der Gliedersonde vollständig und ein daran

angrenzendes Segment teilweise;

Fig. 6 zeigt eine Ansicht eines Verbindungselements eines Segments;

Fig. 7 zeigt ein Teil eines Segments und das Endstück der Sonde;

Fig. 8 zeigt ein Schaltbild einer Temperatursonde, die selbsttätig eine

Reihenfolge der angeschlossenen Temperatursensoren bestimmt;

und

Fig. 9 zeigt das Schaltbild von Fig. 8, wobei den Ausgängen der

Schaltelemente jeweils ein Timer nachgeschaltet ist.

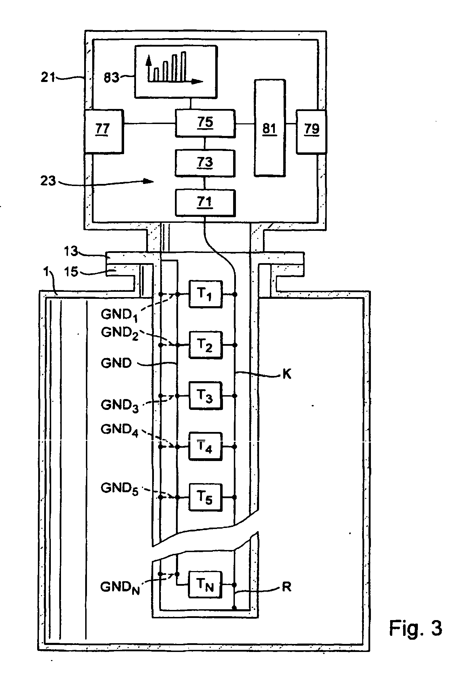

Fig. 3 zeigt eine schematische Darstellung einer erfindungsgemäßen Temperatursonde. Die Temperatursonde weist eine mechanische Befestigungsvorrichtung 13, in dem dargestellten Ausführungsbeispiel einen Flansch auf, mittels derer sie auf einem Behälter 1, beispielsweise auf einem entsprechenden Stutzen 15, montierbar ist. Die Befestigungsvorrichtung 13 trägt eine in dem dargestellten Beispiel im wesentlichen rohrförmige starre oder flexible hohlzylindrische Hülse 19, die im montierten Zustand in den Behälter 1 hinein führt. Auf dem Flansch ist ein Gehäuse 21 angeordnet, in dem beispielsweise eine Sondenelektronik angeordnet sein kann.

In der Hülse 19 sind mehrere Temperatursensoren T1, T2 ... TN übereinander angeordnet. Jeder der Temperatursensoren T1 bis TN ist jeweils parallel zu den anderen Temperatursensoren an Masse GND und an eine in der Hülse 19 gerührte Kommunikationsleitung K angeschlossen.

Vorzugsweise besteht die Hülse 19 zumindest teilweise aus einem elektrisch leitfähigen Material, z.B. aus Messing, aus einem Edelstahl oder einem anderen im Hinblick auf die am Einsatzort mit der Sonde in Berührung kommenden Medien geeigneten Werkstoff, und ist geerdet. Die Erdung kann beispielsweise über die Sondenelektronik erfolgen. Alternativ kann die Erdung aber auch über die mit der Hülse 19 verbundene Befestigungsvorrichtung 13 und den geerdeten Behälter 1 erfolgen. Die Erdung ist beispielsweise für den Einsatz in explosionsgefährten Bereichen, wie sie in der Öl- und Gasindustrie regelmäßig vorliegen, aus Sicherheitsgründen vorzusehen. Der Anschluss der Temperatursensoren T1, ..., TN an Masse GND erfolgt vorzugsweise unmittelbar, in dem jeder Temperatursensor Tₓ über die geerdete Hülse 19 an Masse angeschlossen wird. Hierzu genügt jeweils eine kurze in Fig. 3 gestrichelt dargestellte Verbindung GND₁, ..., GND_{N} vom jeweiligen Erdanschluss des einzelnen Temperatursensor T1,..., TN zu einem elektrisch leitfähigen Bereich der Hülse 19 in dessen unmittelbarer Umgebung. Dies bietet den Vorteil, dass die lange durch die gesamte Länge der Hülse 19 hindurch zu jedem einzelnen Temperatursensor T1, ..., TN geführte Erdleitung GND entfällt.

Die Temperatursensoren T 1 bis TN werden über die Kommunikationsleitung K mit Energie versorgt. Die Temperatursonde weist eine übergeordneten Einheit 23 auf, die an die Kommunikationsleitung K angeschlossen ist. Die übergeordnete Einheit 23 ist beispielsweise in dem Gehäuse 21 angeordnet.

Jeder Temperatursensor Tₓ dient dazu eine lokale Temperatur in dessen unmittelbarer Umgebung zu messen und diese in Form eines digitalen Temperatursignals über die Kommunikationsleitung K der übergeordneten Einheit 23 zur Verfügung zu stellen.

Als Temperatursensoren T1, ..., TN eignen sich bevorzugt busfähige Sensoren, die über ein entsprechendes Protokoll über eine einzige Busleitung angesprochen und versorgt werden. In dem Fall ist die Kommunikationsleitung K eine Busleitung, die über die die einzelnen Temperatursensoren Tₓ mittels eines sensorspezifisches Protokolls angesprochen werden. Ein Beispiel für einen derartigen Temperatursensor ist das '1 Wire Parasite-Power Digital Thermometer: DS18520 - PAR' der Firma Dallas Semiconductor. Diese Temperatursensoren weisen einen Anschluss für die Kommunikationsleitung K auf, über die sie sowohl kommunizieren als auch mit Energie versorgt werden. Die Topologie dieser Temperatursensoren erlaubt es mehrere Temperatursensoren parallel an eine einzige Kommunikationsleitung K anzuschließen. Die Rückführung R erfolgt über Masse, hier vorzugsweise über die Hülse 19. Sie bieten zusätzlich den Vorteil eines niedrigen Energieverbrauchs von weniger als 2 mA bei einer Speisespannung von 5 Volt. Außerdem sind sie sehr klein, so dass die Hülse 19 nur einen entsprechend geringen Durchmesser aufweisen muss. Dies ist insbesondere bei Anwendungen, bei denen die für die Temperatursonde vorgesehenen Öffnungen nur geringe Durchmesser aufweisen von Vorteil. Ein weiterer Vorteil dieser Temperatursensoren besteht darin, dass sie bereits vom Hersteller mit einer eindeutigen Adresse ausgestattet sind.

Die Hülse 19 kann beispielsweise ein starres metallisches Rohr sein. Sie kann aber auch flexibel ausgebildet sein. Dies ist insb. dann von Vorteil, wenn nur wenig Platz über der Behälteröffnung zur Einführung der Sonde zur Verfügung steht. Da bei der erfindungsgemäßen Temperatursonde lediglich die Kommunikationsleitung K und gegebenenfalls Masse GND über die gesamte Länge der Hülse 19 geführt werden, ist der Verdrahtungsaufwand innerhalb der Sonde sehr gering. Die geringe Anzahl der erforderlichen Leitungen ermöglicht einen sehr geringen Hülsendurchmesser. Außerdem ist gerade bei flexiblen Hülsen 19 das Risiko einer Beschädigung der Leitungen und der Anschlüsse deutlich reduziert.

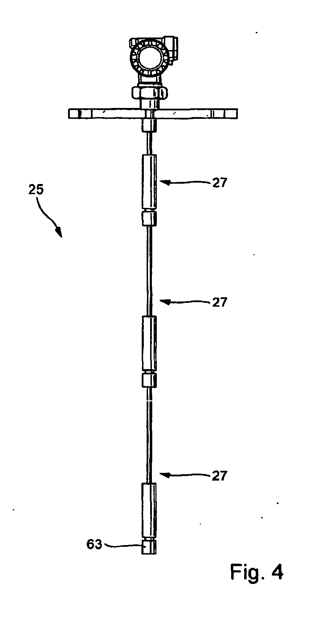

Vorzugsweise ist die erfindungsgemäße Temperatursonde als Gliedersonde ausbildet. Fig. 4 zeigt eine Ansicht einer erfindungsgemäßen Gliedersonde. Bei der Gliedersonde besteht die in den Behälter 1 hinein zu führende Messeinheit aus einzelnen Segmenten 27, die miteinander verbunden werden. Die einzelnen Segmente 27 sind im Vergleich zur Länge der gesamten Sonde sehr kurz. Sie können beispielsweise eine Länge von 0,5 m bis 1,0 m aufweisen. Die Segmente 27 können einzeln zur Behälteröffnung gebracht, dort nacheinander miteinander verbunden und in den Behälter 1 abgesenkt werden. Dies bietet den Vorteil, dass oberhalb des Behälters 1 lediglich die für die Verbindung zweier Segmente 27 erforderliche Höhe zur Verfügung stehen muss. Diese geringe Höhe ist in der Regel vorhanden, so dass auf den Einsatz flexibler Hülsen, bei denen für die darin enthaltenen Leitungen und Anschlüsse eine größere mechanische Beanspruchung zu erwarten ist, als bei starren Hülsen, in der Regel verzichtet werden kann.

Die Hülse 25 der Gliedersonde, wird aus den einzelnen mit einander verbindbaren Segmenten 27 zusammen gesetzt. In jedem Segment 27 ist ein Temperatursensor T angeordnet. In Fig. 4 sind lediglich drei Segmente 27 dargestellt. Die Anzahl der Segmente 27 ist jedoch in keiner Weise auf drei festgelegt. Sie wird vielmehr in Abhängigkeit von der Höhe des Behälters 1 und der Anzahl der für eine ausreichend genaue Bestimmung der mittleren Temperatur oder der Temperaturverteilung im Behälter gewählt. Dabei können beispielsweise bis zu 20 Temperatursensoren T eingesetzt werden.

In jedem Segment 27 verläuft ein Leitungssegment Kₓ der Kommunikationsleitung K, an das der jeweilige Temperatursensor Tₓ angeschlossen ist. Die einzelnen Leitungssegmente Kₓ weisen-endseitig nachfolgend anhand eines Beispiels näher beschriebene Anschlussmittel auf, über die die einzelnen Leitungssegmente Kₓ aneinander angrenzender Segmente 27 der Sonde elektrisch miteinander verbindbar sind.

Der Anschluss der einzelnen Temperatursensoren Tₓ an Masse kann natürlich ebenfalls über entsprechende in den Segmenten 27 geführte Leitungsegmente erfolgen, die miteinander zu einer Erdleitung verbunden werden. Vorzugsweise erfolgt er jedoch über die metallische Hülse 25, indem jeder Temperatursensor Tₓ einzeln wie nachfolgend beschrieben über die metallische Hülse 25 am jeweiligen Segment 27 geerdet wird.

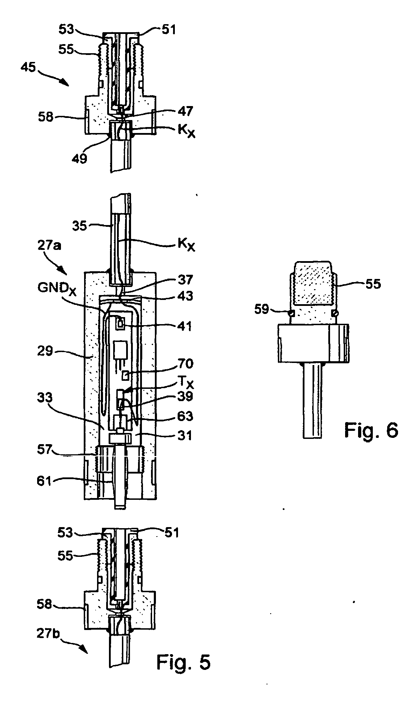

Fig. 5 zeigt ein Segment 27a und ein damit verbindbares Ende eines weiteren Segments 27b im Detail. Das Segment 27a umfasst einen rohrförmigen Abschnitt 29, der innen einen zylindrischen Hohlraum 31 aufweist, in dem der Temperatursensor T angeordnet ist. Der verbleibende Hohlraum 31 ist vorzugsweise mit einer Vergussmasse 33 aufgefüllt. Auf einer ersten Stirnseite des Abschnitts 29 ist ein Rohrsegment 35 montiert, in dem das jeweilige Leitungssegment Kₓ der Kommunikationsleitung K verläuft. Das Rohrsegment 35 ist beispielsweise auf eine stirnseitig angeordnete Bohrung 37 aufgeschweißt, durch die das Leitungssegment Kₓ der Kommunikationsleitung K in den Hohlraum 31 hinein geführt ist. Das Leitungssegment Kₓ der Kommunikationsleitung K ist im Hohlraum 31 mit dem entsprechenden Anschluss 39 des Temperatursensors T verbunden. Diese Verbindung ist durch den starren Abschnitt 29 der Hülse 25 und die Vergussmasse gegenüber mechanischen Belastungen geschützt.

Der Erdansschluss 41 jedes Temperatursensors Tₓ ist über eine kurze Leitung GNDₓ mit einem im Hohlraum 31 eingespannten metallischen Federring 43 verbunden, der eine elektrisch leitende Verbindung zur metallischen Hülse 27a, hier der Außenwand des rohrförmigen Abschnitts 29, bewirkt.

Auf dem anderen Ende des Rohrsegments 35 ist ein Verbindungselement 45 angeordnet, das dazu dient, eine elektrische und eine mechanische Verbindung zu dem darauf zu montierenden nächsten Segment 27 herzustellen. Fig. 6 zeigt eine Ansicht des Verbindungselements 45. Das Verbindungselement 45 ist aus einem elektrisch leitfähigen Material, z.B. aus Messing, aus einem Edelstahl, oder einem anderen im Hinblick auf die am Einsatzort mit der Sonde in Berührung kommenden Medien geeigneten Werkstoff, und weist eine durchgängige Bohrung 47 auf, in die das Ende des Rohrsegments 35 mündet. Das Rohrsegment 35 ist an dieser Stelle über eine Schweißverbindung 49 mit dem Verbindungselement 45 verbunden. Im Inneren des Verbindungselements 45 ist eine metallische Kontakthülse 51 angeordnet, die gegenüber dem Verbindungselement 45 durch einen Einsatz 53 aus einem Isolator, z.B. einem Kunststoff, isoliert ist. Die Kontakthülse 51 besteht beispielsweise aus Gold und ist an das durch das Rohrsegment 35 hindurch geführte Leitungssegment Kₓ der Kommunikationsleitung K angeschlossen.

Außen ist an das Verbindungselement 45 endseitig ein Gewinde 55 angeformt.

Das Gegenstück zum Verbindungselement 45 befindet sich auf der jeweils vom Rohrsegment 35 abgewandten Seite des Abschnitts 29. Der Abschnitt 29 ist an diesem Ende offen und weist ein Innengewinde 57 auf, in das das Gewinde 55 des jeweils zu verbindenden Segments 27 eingeschraubt wird. Zur Erleichterung der Montage kann das Verbindungselement 45 außen einen sechskantförmigen Abschnitt 58 aufweisen, an den ein entsprechender Schlüssel angesetzt werden kann.

Zusätzlich ist vorzugsweise eine Dichtung 59, z.B. ein O-Ring, vorgesehen, die beispielsweise in eine zwischen dem Außengewinde 55 und dem an das Verbindungselement 45 angeschweißten Rohrsegment 35 angeordnet sein kann.

Selbstverständlich können zur Sicherung der Verbindung noch weitere, in den Figuren nicht dargestellte Elemente, z.B. Überwurfmuttern oder Sicherungsringe, eingesetzt werden.

Der rohrförmige Abschnitt 29, das Rohrsegment 35 und das Verbindungselement 35 bestehen aus einem elektrisch leitfähigen Material, z.B. aus Messing, aus einem Edelstahl oder einem anderen im Hinblick auf die am Einsatzort mit der Sonde in Berührung kommenden Medien geeigneten Werkstoff, und die einzelnen Segmente 27 bilden zusammen die Hülse 25. Die einzelnen Segmente 27 sind über eine mechanische Verbindung, hier die Gewinde 55 und 57, verbunden, die zugleich eine elektrische Verbindung zwischen den einzelnen Segmenten 27 bewirkt. Damit genügt es lediglich das zuletzt in den Behälter einzusetzende Segment 27 z.B. über den Flansch 13 und den Stutzen 15 oder über einen entsprechenden Anschluss zu erden, um einen Erdanschluss für alle Segmente 27 bzw. die darin jeweils enthaltenen Temperatursensoren Tₓ zu bewirken.

In dem rohrförmigen Abschnitt 29 ist ein stabförmiger Kontaktstift 61, vorzugsweise ein Federkontakt, angeordnet, der aus dem Abschnitt 29 heraus führt und durch das Verschrauben von zwei aneinander angrenzenden Segmenten, hier 27a und 27b, in die Kontakthülse 51 des entsprechenden Verbindungselements 45 eingesteckt wird. Der Kontaktstift 61 ist über einen Anschluss 63 des Temperatursensors T an das in dem jeweiligen Segment 27 geführte Leitungssegment Kₓ der Kommunikationsleitung K angeschlossen.

Die Kontakthülse 51 und der Kontaktstift 61 bilden die Anschlussmittel, über die die einzelnen Leitungssegmente Kₓ aneinander angrenzender Segmente 27 der Sonde elektrisch miteinander verbindbar sind. Natürlich sind hier auch andere Anschlussmittel, z.B. andere Arten von Steckverbindern, einsetzbar.

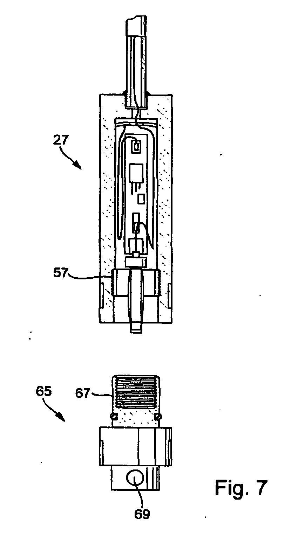

Den Abschluss der Sonde bildet ein in Fig. 7 dargestelltes Endstück 65, das genau wie die Verbindungselemente 45 ein Außengewinde 67 aufweist, dass in das Innengewinde 57 des angrenzenden Segments 27 eingeschraubt wird. Das Endstück 65 ist im wesentlichen ein topfförmiges endseitig verschlossenes Bauteil, das die Sonde endseitig verschließt. Vorzugsweise ist außen am Endstück 65 eine Befestigungsvorrichtung 69 vorgesehen, die eine Befestigung der Sonde im Behälter ermöglicht. Diese Befestigung kann beispielsweise über ein in Fig. 7 nicht dargestelltes Gewicht erfolgen, das an der Befestigungsvorrichtung 69 montiert wird.

Der Kontaktstift 61 des mit dem Endstück 65 verbundenen Segments 27 führt in das Endstück 65 hinein und ist dort an Masse GND angeschlossen. Dies geschieht vorzugsweise über das metallische Gehäuse des Endstücks 65, das über das Außengewinde 67 an die geerdete Hülse 25 angeschlossen ist. Hierzu kann in dem Endstück 65 die gleiche Kontakthülse angeordnet sein, die auch in den Verbindungselementen 45 verwendet wird. Im Unterschied zu den Kontakthülsen 61 der Verbindungselemente 45 ist diese jedoch nicht gegenüber dem Gehäuse des Endstücks 65 isoliert, sondern steht in unmittelbarem elektrischem Kontakt zu dem Gehäuse.

Die einzelnen Temperatursensoren Tₓ sind über die Kommunikationsleitung K an die übergeordnete Einheit 23 angeschlossen. Vorzugsweise ist jedem Temperatursensor Tₓ eine eindeutige Adresse zugeordnet und jeder Temperatursensor Tₓ weist einen Speicher 70 zur Speicherung von Daten, wie z.B. Kalibrationsdaten und die Länge des Segments, auf. Auf diese Weise erkennt die übergeordnete Einheit 23 selbsttätig Art und Anzahl der daran angeschlossenen Temperatursensoren Tₓ.

Diese eindeutige Adresse ist bereits vorab bei der Kalibration der Temperatursensoren Tₓ von Vorteil. Es können mehrere Temperatursensoren Tₓ zeitgleich in einer Kalibriervorrichtung kalibriert werden. Dabei kann die Zuordnung der einzelnen Temperatursensoren Tₓ anhand der Adressen erfolgen. Die Kalibrationsdaten können dann, z.B. über einen PC aufgenommen und gespeichert werden. Es können Kennlinien ermittelt werden und die Kennlinien bzw. die Kalibrationsdaten können, z.B. über den PC, anhand der eindeutigen Adressen unmittelbar in dem dem jeweiligen Temperatursensor Tₓ zugeordneten Speicher 70 abgelegt werden.

Die übergeordnete Einheit 23 ist in Fig. 3 schematisch dargestellt und umfasst z.B. eine vorzugsweise eigensichere Eingangsschaltung 71, an die die Kommunikationsleitung K angeschlossen ist, ein Kommunkations-Interface 73, über das die Kommunikation mit den Temperatursensoren Tₓ erfolgt, und eine elektronische Einheit 75, z.B. einen Mikrocontroller oder einem Mikroprozessor, zur Aufnahme, zur Aufbereitung, zur Verarbeitung und/oder Weiterleitung der Messergebnisse. Sie ist mit einem Anschluss 77 ausgestattet, über den die Sonde mit Energie versorgt wird. Darüber hinaus ist eine mit einem weiteren Anschluss 79 ausgestatte Schnittstelle 81 vorgesehen, über den die Sonde beispielsweise an eine speicherprogrammierbare Steuerung, ein Prozessleitsystem oder an einen Personalcomputer anschließbar ist. Derartige Schnittstellen sind in der Mess- und Regeltechnik Standard und daher hier nicht näher erläutert. Als mögliche Beispiele sein lediglich Hart und Fieldbus genannt. Des Weiteren kann eine Vorort-Anzeige 83 vorgesehen sein.

Die übergeordnete Einheit 23 erfasst die Messdaten der einzelnen Temperatursensoren Tₓ. Anhand dieser Messdaten kann sie sowohl ein detailliertes Temperaturprofil als auch eine mittlere Temperatur im Behälter errechnen. Bei der Bestimmung der mittleren Temperatur wird vorzugsweise zusätzlich die Kenntnis des separat gemessenen Füllstandes im Behälter berücksichtigt. Der aktuelle Füllstand kann der übergeordneten Einheit 23 hierzu beispielsweise über die Schnittstelle 81 zur Verfügung gestellt werden.

Die übergeordnete Einheit 23 benötigt Informationen über den Aufbau der Temperatursonde. Hierzu gehört neben der Information über Art und Anzahl der angeschlossenen Temperatursensoren Tx, auch deren Reihenfolge innerhalb der Sonde und deren Einbauhöhe. Bei einer werkseitig vollständig aufgebauten Sonde können diese Daten werkseitig in der übergeordneten Einheit 23 abgespeichert werden.

Bei der beschriebenen Gliedersonde können sensorspezifische Daten, wie z.B. Typangaben, Angaben über die Länge des Segments in dem sich der jeweilige Temperatursensor befindet, sowie die Einbauhöhe des jeweiligen Temperatursensors im Segment, über auf entsprechende außen auf den einzelnen Segmenten aufgebrachte Kennzeichnungen übermittelt, und nach dem Zusammenbau der Sonde über eine entsprechende Eingabevorrichtung der übergeordneten Einheit 23 zusammen mit der Reihenfolge, in der die einzelnen Segmente bzw. Temperatursensoren aneinander montiert wurden, zugeführt werden.

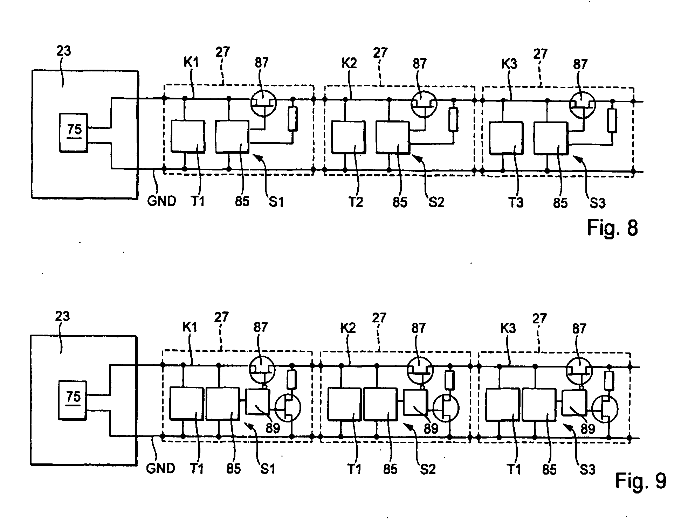

Vorzugsweise wird dieser Vorgang jedoch automatisiert, indem die Temperatursonde in die Lage versetzt wird, diese Informationen selbsttätig zu bestimmen. Fig. 8 zeigt ein Schaltbild einer entsprechend weitergebildeten Temperatursonde bei der exemplarisch drei Segmente 27 an die übergeordnete Einheit 23 angeschlossenen sind. Jedes Segment 27 umfasst jeweils einen Temperatursensor, hier T1, T2 und T3. Jedem dieser Temperatursensoren T1, T2 und T3 ist jeweils ein Schalter S1, S2 und S3 nachgeschaltet. Jeder Schalter S 1, S2, S3 ist parallel zu dem zugehörigen Temperatursensor T1, T2 bzw. T3 an Masse GND und an das im jeweiligen Segment 27 verlaufende Segment K1, K2 bzw. K3 der Kommunikationsleitung K angeschlossen, und die Kommunikationsleitung K ist an die übergeordnete Einheit 23, genauer gesagt an die darin enthaltene elektronisch Einheit 75 angeschlossen.

Jeder Schalter S1, S2, S3 verfügt über eine eindeutige Adresse, über die er von der übergeordneten Einheit 23 über die Kommunikationsleitung K erkannt und einzeln angesteuert werden kann. Jeder Schalter S1, S2 , S3 ist derart an die Kommunikationsleitung K angeschlossen, dass er in Abhängigkeit von der Ansteuerung durch die übergeordnete Einheit 23, eine Schalterstellung einnehmen kann, die bewirkt, dass die Kommunikationsleitung K zumindest zeitweilig unterbrochen ist, und alle nachfolgenden Temperatursensoren T und die diesen nachgeschalteten Schalter S von der Kommunikationsleitung K abgetrennt sind. Dies bietet den Vorteil, dass ausschließlich die Kommunikationsleitung K genutzt wird. Weitere Leitungen sind nicht erforderlich.

Als Schalter S1, S2, S3 wird hier bevorzugt ein busfähige digitales Schaltelement 85 verwendet, dessen digitaler Ausgang zur Steuerung einer Basis eines in die Kommunikationleitung K eingesetzten Transistors 87 verwendet wird. Das Schaltelement 85 wird genau wie die Temperatursensoren T1, T2, T3 über ein entsprechendes Protokoll über eine einzige Busleitung, hier die Kommunikationsleitung K, versorgt und mittels eines entsprechenden Protokolls angesprochen.

Ein Beispiel für ein derartiges Schaltelement ist der '1 Wire Dual Channel Adressable Switch DS2413' der Firma Dallas Semiconductor. Diese Schaltelemente 85 weisen einen Anschluss für die Kommunikationsleitung K auf, über die sie sowohl kommunizieren als auch mit Energie versorgt werden. Die Topologie dieser Schaltelemente 85 erlaubt es mehrere Schaltelemente 85 parallel an eine einzige Kommunikationsleitung K anzuschließen. Diese Schaltelemente 85 verfügen über eine eindeutige Adresse über die sie von der übergeordneten Einheit 23 auch dann einzeln erkannt und angesprochen werden können, wenn sehr viele Schaltelemente 85 an die Kommunikationsleitung K angeschlossen sind.

Jedem Schalter S1, S2, S3 ist ein über die Kommunikationsleitung auslesbarer Speicher zugeordnet, indem Daten abgelegt sind, über die der dem Schalter S1, S2, S3 zugehörige Temperatursensor T1, T2, T3 eindeutig identifizierbar ist. Dabei ist es unerheblich, ob der Speicher Bestandteil des Schalters S, Bestandteile des Temperatursensors T oder eigenständig ist. Es kann hierzu beispielsweise der zuvor beschriebene Speicher 70 verwendet werden, der in jedem Segment 27 angeordnet ist. Wichtig ist nur, dass der Speicher über die Kommunikationsleitung K ausgelesen werden kann, und die darin enthaltenen Daten es der übergeordneten Einheit 23 erlauben, dem jeweiligen Schalter S den im gleichen Segment 27 angeordneten zugehörigen Temperatursensor T zuzuordnen. Zusätzlich sind in diesem Speicher vorzugsweise Angaben über die Länge des jeweiligen Segments 27 und über die Einbauhöhe des jeweiligen Temperatursensors im Segment 27 enthalten. Des Weiteren können Kalibrationsdaten sowohl vor dem Zusammenbau der Sonde als auch nachträglich in dem Speicher abgelegt werden.

Die Bestimmung der Reihenfolge, in der die Temperatursensoren T1, T2, T3 in der Temperatursonde angeordnet sind erfolgt nun, indem die übergeordnete Einheit 23 über die Kommunikationsleitung K zunächst die angeschlossenen Schalter S1, S2, S3 bestimmt. Hierzu werden alle Adressen der über die Kommunikationsleitung K erreichbaren Schalter S1, S2, S3 ausgelesen, und deren Anzahl bestimmt.

Danach versetzt die übergeordnete Einheit 23 alle Schalter einzeln nacheinander in eine Schalterstellung, bei der alle dem jeweiligen Schalter nachfolgenden Schalter von der Konimunikationsleitung K abgetrennt sind.

Während dieses Zustandes bestimmt die übergeordneten Einheit die Anzahl der nun noch an die Kommunikationsleitung angeschlossenen Schalter. In einem letzten Schritt werden anhand dieser Anzahlen die Reihenfolge der Schalter und der zugehörigen Temperatursensoren ermittelt.

Bei dem in Fig. 8 dargestellten Ausführungsbeil ergibt sich diese wie folgt:

Durch die Betätigung von Schalter S1 werden die nachfolgenden Schalter S2 und S3 von der Kommunikationsleitung K abgetrennt. Die übergeordnete Einheit 23 registriert in diesem Zustand nur einen Schalter, S1. Folglich muss dieser Schalter S1 den ersten Platz in der Reihenfolge einnehmen. Anhand der in dem dem Schalter S 1 zugeordneten Speicher kann nun auch der zugeordnete Temperatursensor T1 bestimmt werden, der natürlich den gleichen Platz in der Reihenfolge einnimmt, wie der zugehörige Schalter S 1.

Durch die Betätigung von Schalter S2 wird der nachfolgende Schalter S3 von der Kommunikationsleitung K abgetrennt. Die übergeordnete Einheit 23 registriert in diesem Zustand zwei Schalter, S1 und S2. Folglich muss der Schalter S2 und damit auch der über die Daten im Speicher diesem Schalter S2 zuzuordnende Temperatursensor T2 den zweiten Platz in der Reihenfolge einnehmen. Durch die Betätigung von Schalter S3 wird kein nachfolgender Schalter von der Kommunikationsleitung K abgetrennt. Die übergeordnete Einheit 23 registriert in diesem Zustand drei Schalter, S1, S2 und S3. Folglich muss der Schalter S3 und damit auch der zugeordnete Temperatursensor T3 den dritten Platz in der Reihenfolge einnehmen. Da vorab eine Gesamtzahl von drei Schaltern ermittelt wurde ist das Verfahren hiermit abgeschlossen.

Alternativ zu den in Fig. 8 dargestellten Ausführungsbeispielen, bei denen das Schaltelement 85 unmittelbar auf den Transistor 87 einwirkt, kann zwischen den Ausgang des Schaltelements 85 und der Basis des Transistors 87 ein Timer 89, z.B. ein flankengesteuerter monostabiler Oszillator, zwischen geschaltet werden. Ein Ausführungsbeispiel hierzu ist in Fig. 9 dargestellt. Der Timer 89 bewirkt, dass die Unterbrechung der Kommunikationsleitung K durch den jeweiligen Schalter S1, nur für einen vorgegebenen kurzen Zeitraum erfolgt, der für die Bestimmung der in diesem Zustand in der Kommunikationsleitung K verbleibenden Schalter ausreicht. Dies bietet den Vorteil, dass ein Defekt eines einzelnen Schalters nicht zu einer dauerhaften Unterbrechung der Kommunikationsleitung K führen kann.

Aufgrund der Verwendung von Temperatursensoren

die ausschließlich parallel zueinander an Masse GND und an eine einzige Kommunikationsleitung K angeschlossen werden und ein digitales Ausgangssignal liefern weist die erfindungsgemäße Sonde eine sehr viel geringere Anzahl von Leitungen und Anschlüssen auf. Hierdurch ist es erstmals möglich, Sonden mit sehr geringen Durchmessern herzustellen, die zudem noch aufgrund der geringen Anzahl der Leitungen und Anschlüsse sehr robust und kostengünstig sind.

Ein weiterer Vorteil der Erfindung besteht darin, dass es aufgrund der geringen Anzahl der Leitungen und der zugehörigen Anschlüsse erstmals möglich ist, die Sonde als Gliedersonde aufzubauen, die sich aus einzelnen Segmenten 27 zusammen setzt. Die Segmente 27 sind, wie oben beschrieben auf sehr einfache Weise elektrisch und mechanisch miteinander verbindbar. Es sind keinerlei Spezialwerkzeuge erforderlich. Dies ermöglicht dem Hersteller und dem Benutzer ein hohes Maß an Flexibilität. Anstelle von teueren Spezialanfertigungen vorgegebener Länge können nun Sonden beliebiger Länge aus den einzelnen Segmenten 27 zusammengestellt werden. Es ist sowohl für den Hersteller als aus für den Anwender möglich, einzelne Segmente 27 auf Lager zu halten, um schnell und flexibel auf Anforderungen reagieren zu können. Die Segmente 27 sind für alle Sonden gleich und erlauben es sehr schnell und flexibel Sonden unterschiedlicher Länge mit unterschiedlicher Anzahl an Temperatursensoren Tx zusammen zu stellen. Spezialanfertigungen sind nicht mehr erforderlich.

Sollte ein Segment 27 ausfallen, so kann die übergeordnete Einheit 23 anhand dessen eindeutiger Adresse erkennen, welches Segment 27 fehlerhaft ist. Es ist möglich das betroffene Segment einzeln auszutauschen, ohne das die gesamte Sonde ersetzt werden muss.

Außerdem ist es möglich eine gewisse Redundanz vorzusehen, indem beispielsweise mehr Temperatursensoren Tₓ als zwingend vorgeschrieben eingesetzt werden. Die Anzahl der Leitungen erhöht sich hierdurch nicht. Durch Redundanz kann eine höhere Genauigkeit für die mittlere Temperatur und ein detailliertes Temperaturprofil erzielt werden. Außerdem muss im Falle einer Redundanz nicht bei jedem Ausfall eines einzelnen Temperatursensors unmittelbar ein Austausch des entsprechenden Segments vorgenommen werden. Die verbleibenden fehlerfrei arbeitenden Sensoren liefern nach wie vor ein ausreichend genaues Ergebnis.

**Tabelle 1**

| | |
|---|---|
| 1 | Behälter |
| 3 | Temperaturfühler |
| 5 | Widerstandswandler |
| 7 | Multiplexer |
| 9 | übergeordnete Einheit |
| 11 | Widerstandselemente |
| 13 | Befestigungsvorrichtung |
| 15 | Stutzen |
| 19 | Hülse |
| 21 | Gehäuse |
| 23 | übergeordnete Einheit |
| 25 | Hülse |
| 27 | Segment |
| 29 | rohrförmigen Abschnitt |
| 31 | zylindrischer Hohlraum |
| 33 | Vergussmasse |
| 35 | Rohrsegment |
| 37 | Bohrung |
| 39 | Anschluss |
| 41 | Erdanschluss |
| 43 | Federring |
| 45 | Verbindungselement |
| 47 | Bohrung |
| 49 | Schweißverbindung |
| 51 | Kontakthülse |
| 53 | Einsatz |
| 55 | Gewinde |
| 57 | Innengewinde |
| 59 | Dichtung |
| 61 | Kontaktstift |
| 63 | Anschluss |
| 65 | Endstück |
| 67 | Außengewinde |
| 69 | Befestigungsvorrichtung |
| 70 | Speicher |
| 71 | eigensichere Eingangsschaltung |
| 73 | Kommunikations Interface |
| 75 | elektronische Einheit |
| 77 | Anschluss |
| 79 | Anschluss |
| 81 | Schnittstelle |
| 83 | Vorort Anzeige |
| 85 | Schaltelement |
| 87 | Transistor |
| 89 | Timer |

## Patentansprüche

1. Temperatursonde mit einer Hülse (19, 25), mit einer übergeordneten Einheit (23), und mit mehreren in der Hülse (19, 25) übereinander angeordneten Temperatursensoren (T1, ..., Tₓ), wobei jeder Temperatursensor (T1, ..., TN) dazu dient eine lokale Temperatur in der Umgebung des jeweiligen Temperatursensors (T1, ..., TN) zu messen und wobei jedem Temperatursensor (Tₓ) eine eindeutige Adresse zugeordnet ist,
**dadurch gekennzeichnet,**
**dass** die Hülse (25) aus einzelnen miteinander verbindbaren Segmenten (27) besteht, und in jedem Segment (27) ein Temperatursensor (T) angeordnet ist,
**dass** die Temperatursensoren jeweils parallel zueinander an Masse (GND) und an eine In der Hülse (19, 25) geführte Kommunikationsleitung (K) angeschlossen sind und über diese mit Energie versorgt werden,
**dass** die übergeordnete Einheit (23) an die Kommunikationsleitung (K) angeschlossen ist,
und **dass** die von dem jeweiligen Temperatursensor gemessene lokale Temperatur der übergeordneten Einheit (23) in Form eines digitalen Temperatursignals über die Kommunikationsleitung (K) zur Verfügung gestellt ist.

2. Temperatursonde nach Anspruch 1,
**dadurch gekennzeichnet,**
**dass** die Hülse (19, 25) zumindest teilweise aus einem elektrisch leitfähigen Material besteht, die Hülse (19, 25) geerdet ist, und
die Temperatursensoren (T1, ..., TN) über die geerdete Hülse (19, 25) an Masse angeschlossen sind.

3. Temperatursonde nach Anspruch 1,
**dadurch gekennzeichnet,**
**dass** jeder Temperatursensor (Tx) einen Speicher (70) zur Speicherung von Daten aufweist.

4. Temperatursonde nach Anspruch 1,
**dadurch gekennzeichnet,**
**dass** die Temperatursensoren (T) jeweils in einem Hohlraum (31) in einem Abschnitt (29) des jeweiligen Segments (27) der Hülse (25) angeordnet sind, der mit einer Vergussmasse (33) aufgefüllt ist.

5. Temperatursonde nach Anspruch 1,
**dadurch gekennzeichnet,**
**dass** in jedem Segment (27) ein Leitungssegment (Kx) der Kommunikationsleitung (K) verläuft, an das der jeweilige Temperatursensor (Tx) angeschlossen ist, und dass die einzelnen Leitungssegmente (Kx) endseitig Anschlussmittel aufweisen, über die die einzelnen Leitungssegmente (Kx) aneinander angrenzender Segmente (27) der Sonde elektrisch miteinander verbindbar sind.

6. Temperatursonde nach Anspruch 5,
**dadurch gekennzeichnet,**
**dass** die Anschlussmittel einen an einem ersten Ende des jeweiligen Leitungssegment (Kₓ) angeschlossenen Kontaktstift (61) und eine an einem zweiten Ende des jeweiligen Leitungssegments (Kx) angeordnete Kontakthülse (51) aufweisen, und die Anschlussmittel gegenüber dem jeweiligen Segment (27) der Hülse (25) isoliert sind.

7. Temperatursonde nach Anspruch 1,
**dadurch gekennzeichnet,**
**dass** die Segmente (27) der Hülse (25) über mechanische Verbindungen miteinander verbunden sind, die zugleich eine elektrische Verbindung bewirken, über die die einzelnen Segmente (27) geerdet sind.

8. Temperatursonde nach einem der vorangehenden Ansprüche,
**dadurch gekennzeichnet, dass**
- jedem Temperatursensor (T1, T2, T3) ein Schalter (S1, S2, S3) nachgeschaltet ist,
- der an Masse (GND) und an die Kommunikationsleitung (K) angeschlossen ist,
- der über eine eindeutige Adresse verfügt über die er von der übergeordneten Einheit (23) über die Kommunikationsleitung (K) erkannt und einzeln angesteuert werden kann,
- der derart an die Kommunikationsleitung (K) angeschlossen ist,
- dass er in Abhängigkeit von der Ansteuerung durch die übergeordnete Einheit (23), eine Schalterstellung einnehmen kann, die bewirkt, dass die Kommunikationsleitung (K) zumindest zeitweilig unterbrochen ist, und alle nachfolgenden Temperatursensoren und die diesen nachgeschalteten Schalter von der Kommunikationsleitung (K) abgetrennt sind, und
- jedem Schalter (S1, S2, S3) ein über die Kommunikationsleitung (K) auslesbarer Speicher (70) zugeordnet ist, indem Daten abgelegt sind, über die der dem Schalter (S1, S2, S3) zugehörige Temperatursensor (T1, T2, T3) eindeutig identifizierbar ist.

9. Verfahren zur Bestimmung einer Reihenfolge der Temperatursensoren einer Temperatursonde nach Anspruch 8,
**dadurch gekennzeichnet, dass**
- die übergeordnete Einheit (23) über die Kommunikationsleitung (K) die angeschlossenen Schalter (S1, S2, S3) bestimmt,
- die übergeordnete Einheit (23) die Schalter (S1, S2, S3) einzeln nacheinander in eine Schalterstellung versetzt, bei der alle dem jeweiligen Schalter nachfolgenden Schalter von der Kommunikationsleitung (K) abgetrennt sind,
- die übergeordneten Einheit (23) in diesem Zustand die Anzahl der nun noch an die Kommunikationsleitung (K) angeschlossenen Schalter bestimmt, und
- anhand dieser Anzahlen die Reihenfolge der Schalter (S1, S2, S3) und der zugehörigen Temperatursensoren ermittelt.

## Claims

1. Temperature probe with a sleeve (19, 25), with a higher-order unit (23), and with several temperature sensors (T1 ...Tₓ) arranged above one another in the sleeve (19, 25), where every temperature sensor (T1 ...TN) is used to measure a local temperature in the vicinity of the individual temperature sensor (T1 ...TN) and where every temperature sensor (Tₓ) is assigned a unique address,
**characterized in that**
- the sleeve (25) comprises several individual segments (27) which can be interconnected, and a temperature sensor (T) is arranged in every segment (27)
- the temperature sensors are each connected in a parallel arrangement to ground (GND) and to a communication cable (K) in the sleeve (19, 25) via which the sensors are supplied with power
- the higher-order unit (23) is connected to the communication cable (K)
- and **in that** the local temperature measured by the individual temperature sensor is made available to the higher-order unit (23) in the form of a digital temperature signal via the communication cable (K).

2. Temperature probe as per Claim 1,
**characterized in that**
the sleeve (19, 25) consists, at least in part, of an electrically conductive material, the sleeve (19, 25) is grounded and the temperature sensors (T1 ...TN) are connected to ground via the grounded sleeve (19, 25).

3. Temperature probe as per Claim 1,
**characterized in that**
each temperature sensor (Tₓ) has a memory (70) for storing data.

4. Temperature probe as per Claim 1,
**characterized in that**
the temperature sensors (T) are each arranged in a hollow cavity (31) in a section (29) of the individual segment (27) of the sleeve (25) which is filled with a sealing compound (33).

5. Temperature probe as per Claim 1,
**characterized in that**
a cable segment (Kx) of the communication cable (K) runs in every segment (27) and the individual temperature sensor (Tx) is connected to this individual cable segment, and **characterized in that** the individual cable segments (Kx) have connection elements at the end via which the individual cable segments (Kx) of segments (27) of the probe, which are adjacent to one another, can be electrically connected to one another.

6. Temperature probe as per Claim 5,
**characterized in that**
the connection elements have a contact pin (61) connected to a first end of the individual cable segment (Kx) and have a contact sleeve (51) arranged on a second end of the individual cable segment (Kx), and **in that** the connection elements are isolated from the individual segment (27) of the sleeve (25).

7. Temperature probe as per Claim 1,
**characterized in that**
the segments (27) of the sleeve (25) are interconnected via mechanical connections which effectuate an electrical connection via which the individual segments (27) are grounded.

8. Temperature probe as per one of the previous claims,
**characterized in that**
- a switch (S1, S2, S3) is located downstream of each temperature sensor (T1, T2, T3)
- - said switch being connected to ground (GND) and the communication cable (K)
- - said switch having a unique address via which it can be detected and individually controlled by the higher-order unit (23) via the communication cable (K)
- which is connected in such a way to the communication cable (K)
- - that, depending how it is controlled via the higher-order unit (23), it can assume a switch position which causes the communication cable (K) to be disconnected at least temporarily, and all subsequent temperature sensors and downstream switches to be disconnected from the communication cable (K) and
- a memory (70), which can be read out via the communication cable (K), is assigned to each switch (S1, S2, S3) and is used to store data via which the temperature sensor (T1, T2, T3) pertaining to the switch (S1, S2, S3) can be uniquely identified.

9. Method for determining a sequence of temperature sensors of a temperature probe as per Claim 8,
**characterized in that**
- the higher-order unit (23) determines the connected switches (S1, S2, S3) via the communication cable (K)
- the higher-order unit (23) sets the switches (S1, S2, S3) individually and in succession to a switch position in which all the switches downstream from the switch in question are disconnected from the communication cable (K)
- in this state, the higher-order unit (23) determines the number of the switches still connected to the communication cable (K) and
- on the basis of this number, determines the sequence of the switches (S1, S2, S3) and the associated temperature sensors.

## Revendications

1. Sonde de température avec une douille (19, 25), avec une unité maître (23), et avec plusieurs capteurs de température (T1, ..., Tx) superposées dans la douille (19, 25), chaque capteur de température (T1, ..., TN) servant à mesurer une température locale dans l'environnement du capteur de température (T1, ..., TN) respectif, et une adresse univoque étant attribuée à chaque capteur de température (Tx),
**caractérisée en ce**
**que** la douille (25) est constituée de segments (27) interconnectables, et un capteur de température (T) étant disposé dans chaque segment (27),
**que** les capteurs de température sont chacun raccordés en parallèle, les uns par rapport aux autres, à la masse (GND) et à un câble de communication (K) acheminé dans la douille (19, 25), et qui sont alimentés en énergie par l'intermédiaire de ce câble,
**que** l'unité maître (23) est raccordée au câble de communication (K),
et **que** la température locale mesurée par chaque capteur de température est mise à la disposition de l'unité maître (23) sous la forme d'un signal de température numérique par l'intermédiaire du câble de communication (K).

2. Sonde de température selon la revendication 1,
**caractérisée en ce**
**que** la douille (19, 25) est constituée d'un matériau au moins partiellement électroconducteur, la douille (19, 25) est reliée à la terre et les capteurs de température (T1, ..., TN) sont raccordés à la masse par l'intermédiaire de la douille (19, 25) mise à la terre.

3. Sonde de température selon la revendication 1,
**caractérisée en ce**
**que** chaque capteur de température (Tx) comporte une mémoire (70) destinée à la mémorisation de données.

4. Sonde de température selon la revendication 1,
**caractérisée en ce**
**que** les capteurs de température (T) sont chacun disposés dans un espace creux (31), dans une section (29) du segment (27) respectif de la douille (25), espace qui est rempli d'une masse de scellement (33).

5. Sonde de température selon la revendication 1,
**caractérisée en ce**
**qu'**un segment de câble (Kx) du câble de communication (K) est posé dans chaque segment (27), auquel segment de câble le capteur de température (Tx) respectif est raccordé, et en ce que les différents segments de câble (Kx) présentent en leurs extrémités des moyens de raccordement, par l'intermédiaire desquels les différents segments de câble (Kx) de segments (27) contigus de la sonde peuvent être reliés électriquement entre eux.

6. Sonde de température selon la revendication 5,
**caractérisée en ce**
**que** les moyens de raccordement présentent une broche de contact (61) raccordée à une première extrémité du segment de câble (Kx) respectif et une douille de contact (51) disposée à une deuxième extrémité du segment de câble (Kx) respectif, et que les moyens de raccordement sont isolés par rapport au segment (27) respectif de la douille (25).

7. Sonde de température selon la revendication 1,
**caractérisée en ce**
**que** les segments (27) de la douille (25) sont reliés entre eux par l'intermédiaire de liaisons mécaniques, qui assurent en même temps une liaison électrique, par l'intermédiaire desquels les différents segments (27) sont mis à la terre.

8. Sonde de température selon l'une des revendications précédentes,
**caractérisée en ce**
- **qu'**à chaque capteur de température (T1, T2, T3) est couplé en aval un interrupteur (S1, S2, S3),
- - qui est raccordé à la masse (GND) et au câble de communication (K),
- - qui dispose d'une adresse univoque, par l'intermédiaire de laquelle il peut être reconnu et commandé individuellement par l'unité maître (23) via le câble de communication (K),
- - qui est raccordé au câble de communication (K) de telle manière
- -- à pouvoir adopter une position d'interrupteur en fonction de la commande effectuée par l'unité maître (23), laquelle position produit une interruption au moins temporaire du câble de communication (K), et tous les capteurs de température aval et les interrupteurs couplés en aval par rapport à ces capteurs sont déconnectés du câble de communication (K), et
- **qu'**à chaque interrupteur (S1, S2, S3) est attribuée une mémoire (70) lisible par l'intermédiaire du câble de communication (K), mémoire dans laquelle sont enregistrées des données, par l'intermédiaire desquelles le capteur de température (T1, T2, T3) correspondant à l'interrupteur (S1, S2, S3) peut être identifié de façon univoque.

9. Procédé destiné à la détermination d'un ordre de capteurs de température d'une sonde de température selon la revendication 8,
**caractérisé en ce que**
- l'unité maître (23) définit les interrupteurs (S1, S2, S3) raccordés par l'intermédiaire du câble de communication (K),
- l'unité maître (23) place chacun des interrupteurs (S1, S2, S3) successivement dans une position d'interrupteur, dans laquelle tous les interrupteurs placés en aval de l'interrupteur respectif sont déconnectés par le câble de communication (K),
- l'unité maître (23) détermine dans cet état le nombre des interrupteurs encore raccordés au câble de communication (K), et
- détermine l'ordre des interrupteurs (S1, S2, S3) et les capteurs de température correspondants sur la base de ce nombre.
